# EUROPÄISCHE PATENTSCHRIFT

(11) **EP 2 683 543 B1**
(45) Veröffentlichungstag und Bekanntmachung des Hinweises auf die Patenterteilung: **28.10.2020**
(21) Anmeldenummer: 12709581.8
(22) Anmeldetag: 12.03.2012
(51) Int. Cl.: B29C 70/48, B29C 45/14, B29C 45/04, B29C 45/28, B29C 43/18, B29C 43/36, B29C 43/04, B29C 45/00

(54) **VERFAHREN ZUR HERSTELLUNG EINES FORMTEILS MIT FASERVERSTÄRKTEM TRÄGER UND FUNKTIONSTEILEN**
METHOD FOR PRODUCING A MOULDED PART COMPRISING A FIBRE-REINFORCED SUPPORT AND FUNCTIONAL PARTS
PROCÉDÉ DE FABRICATION D'UNE PIÈCE MOULÉE AU MOYEN D'UN SUPPORT RENFORCÉ PAR DES FIBRES ET PARTIES FONCTIONNELLES

(30) Priorität: 10.03.2011 DE 102011005350
(43) Veröffentlichungstag der Anmeldung: 15.01.2014
(73) Patentinhaber: Lisa Dräxlmaier GmbH, 84137 Vilsbiburg (DE)
(72) Erfinder: HUBAUER, Franz, 84175 Leberskirchen (DE); JÜNGER, Astrid, 83071 Stephanskirchen (DE)
(86) Internationale Anmeldenummer: PCT/EP2012/054240
(87) Internationale Veröffentlichungsnummer: WO 2012/120146

(56) Entgegenhaltungen:
- EP-A1- 0 812 674
- EP-A2- 2 230 061
- DE-A1-102004 054 228
- DE-A1-102007 036 660
- DE-C1- 19 546 551
- DE-T2- 69 222 130
- GB-A- 2 178 996
- GB-A- 2 232 373
- JP-A- 2000 326 365
- US-A- 2 415 961
- US-A- 4 530 654
- US-A1- 2007 152 380

## Beschreibung

### Technisches Gebiet

Die Erfindung betrifft ein Verfahren zur Herstellung eines Formteils mit einem faserverstärkten Träger und mindestens einem damit verbundenen, Kunststoff aufweisenden Anbauteil, wobei das Formteil insbesondere zur Verwendung oder Weiterentwicklung als Dekorteil in Fahrzeuginnenräumen geeignet ist.

### Stand der Technik

Bisher werden Träger für Dekorteile, beispielsweise für die Türinnenverkleidung, Türmittelfelder, Seitenflanken für Mittelkonsolen usw., im Spritzgussverfahren oder mittels Pressen von thermo-/duroplastischen Naturfasermattensystemen hergestellt. Die Verbindung mit Funktionselementen, beispielsweise Versteifungsrippen, Befestigungsmitteln und dergleichen, erfolgt typischerweise über Aufkleben oder Anschweißen der Kunststoffteile. Abschließend werden diese Träger mit Dekoren kaschiert. Ein weiteres Herstellungsverfahren stellt das direkte Hinterspritzen eines Dekors dar.

Im Falle verpresster Trägerteile werden die Arbeitsschritte Verpressen der Trägermatte und Spritzen der Funktionselemente und Verbinden der Funktionselemente mit dem verpressten Träger üblicherweise in unterschiedlichen Arbeitsschritten und unterschiedlichen Werkzeugen ausgeführt.

Die DE 10 2004 054 228 A1 offenbart ein Verfahren und eine Vorrichtung zur Herstellung eines Formteils, wobei in einem ersten Schritt ein Naturfaser aufweisender Rohling erwärmt wird, dann ein Formteil aus dem Rohling durch Zusammenpressen zweier Formelemente hergestellt wird und anschließend ein Funktionsteil durch Anspritzen einer Kunststoffschmelze an das Formteil angeformt wird, wobei vor dem Anspritzen der Kunststoffschmelze eine Kavität am Formteil gebildet wird. Diese Schritte werden in einer Vorrichtung ausgeführt. Ein vergleichbares Verfahren und eine vergleichbare Vorrichtung sind in der DE 692 22 130 T2 offenbart.

In beiden Fällen werden die Funktionselemente oder Kunststoffteile an die Naturfasermatte angespritzt. Eine verbesserte Integration der gepressten Matte und der Funktionsteile erfordert weitere Arbeitsschritte und weitere Vorrichtungen.

Die DE 195 46 551 C1 offenbart ein Dekorteil, das mit einem Holzfurnier beschichtet ist. Das Dekorteil ist als Sandwichelement ausgebildet und besteht aus zwei metallischen Abdeckungen, die über einen Kunststoff in einem Spritzgussprozess verbunden werden, von denen die eine Metallabdeckung bereits vor dem Einspritzen des Kunststoffes oder während des Einspritzens des Kunststoffes beschichtet worden ist. Die DE 195 46 551 C1 offenbart weiterhin ein Spritzgusswerkzeug zur Herstellung eines solchen Dekorteiles, sowie ein Verfahren zu dessen Herstellung.

Die US 2,415,961 offenbart ein Werkzeug und ein Verfahren zur Herstellung von Kunststoffformkörpern, wobei ein Textilstoff in das Werkzeug einlegbar ist, so dass die Kunststoffformkörper auf und um den Textilstoff herum ausgebildet werden. Dabei durchdringt der Kunststoff zum Teil den Textilstoff. Die Druckschrift US 2,415,961 offenbart ein Verfahren zur Herstellung eines Formteils mit einem faserverstärkten Träger und mindestens einem damit verbundenen, Kunststoff aufweisenden Anbauteil, umfassend die Schritte:
a) Einlegen einer faserverstärkten Matte zwischen zwei Werkzeugkomponenten, die sich in einem offenen Zustand befinden, wobei eine Werkzeugkomponente zumindest eine Düse zum Zuführen verflüssigten Kunststoffes und die andere Werkzeugkomponente zumindest eine Kavität zur Ausbildung des Anbauteils aufweisen;
b) Schließen der Werkzeugkomponenten, so dass die Matte unter Druck gesetzt und verpresst wird, um den faserverstärkten Träger herzustellen;
c) Herstellen und Integrieren des Anbauteils, indem Kunststoff durch die Düse und durch die Matte in die Kavität eingebracht und dort verfestigt wird.

### Kurze Beschreibung der Erfindung

Eine Aufgabe der Erfindung besteht darin, die Integration eines gepressten, faserverstärkten Trägers mit Kunststoff aufweisenden Anbauteilen zur Herstellung eines Formteils bei optimiertem Herstellungsprozess zu verbessern.

Die Aufgabe wird mit den Merkmalen gemäß dem Verfahrensanspruch 1 gelöst.

Das erfindungsgemäße Werkzeug kombiniert die Eigenschaften eines Press- und Spritzwerkzeugs. Die Herstellung eines Dekorteilträgers, beispielsweise eines Trägers für die Türinnenverkleidung, mit einer thermo- oder duroplastischen, faserverstärkten Matte als Grundträger und rückseitig vorgesehenen Anbauteilen, wie Funktionselementen, Verstärkungselementen usw., erfolgt in einer Anlage.

Erfindungsgemäß weist die Vorrichtung zur Herstellung eines Formteils mit einem faserverstärkten Träger und mindestens einem damit verbundenen, Kunststoff aufweisenden Anbauteil zumindest zwei Werkzeugkomponenten auf, die gegeneinander verfahrbar sind oder wobei zumindest eine Werkzeugkomponente relativ zur anderen verfahrbar ist. Die Werkzeugkomponenten können als Werkzeughälften ausgebildet sein, die sich durch relatives Verschieben öffnen und schließen lassen. In einem geöffneten Zustand der Werkzeugkomponenten lässt sich eine faserverstärkte Matte einlegen, die beim Schließen der als Formhälften ausgeprägten Werkzeugkomponenten der Matte eine dreidimensionale Kontur verleihen und diese mittels Druck verpressen und verfestigen. Die Matte ist dazu vorzugsweise eine thermo- oder duroplastische Naturfasermatte. In einer der beiden Werkzeugkomponenten ist zumindest eine Düse vorgesehen, durch die verflüssigter Kunststoff auf die eingelegte Matte so beaufschlagt werden kann, dass die bevorzugt heiße und druckbeaufschlagte Schmelze die verpresste oder noch unverpresste Matte durchdringt und auf der gegenüberliegenden Seite in eine Kavität gelangt, die in der anderen Werkzeughälfte ausgebildet ist. Die Kavität entspricht der Form eines Funktionselements, wie beispielsweise einer Verstärkungsrippe oder eines Befestigungsteils, oder allgemein der Form eines Anbauteils. Mittels der bevorzugt steuerbaren Düse können die Schmelzmenge und der Druck geregelt werden. Im Vergleich zum Verpressen des Trägers und nachträglichen Aufbringen bzw. Einbringen von Funktionselementen reduzieren sich die Anzahl der Werkzeuge, Produktionsanlagen und damit die Herstellungskosten. Im Vergleich zu einem Spritzgussträger mit Funktionselementen verringert sich das Gewicht.

Die Werkzeuge gemäß der vorliegenden Erfindung vereinfachen sich noch in einer weiteren Hinsicht, denn die eine oder die mehreren Düsen zur Zufuhr des Kunststoffmaterials und die eine Kavität oder die mehreren Kavitäten zum Ausformen und Verfestigen der Funktionselemente liegen nicht notwendigerweise in einer Werkzeughälfte. Auf diese Weise können auch sehr komplexe Funktionselemente ohne Schwierigkeiten und mit weniger komplexen Werkzeughälften ausgebildet werden. Die Befestigung bzw. Integration der Funktionselemente mit dem Träger ist deutlich verbessert, da der durchgespritzte Kunststoff eine Verbindung mit dem Polymer der bevorzugt noch erwärmten Matte eingeht. Des Weiteren bildet sich eine mechanische Verbindung, eine Art mechanische Verkrallung, entlang der gesamten Dicke des durchspritzen Bereichs der Matte, was die Integration ebenfalls verbessert. Auf der Oberfläche der Dekorseite entstehen keine Absätze, Unebenheiten und dergleichen. Durch das gezielte Hindurchspritzen des Kunststoffs bleibt die Fasermatte in den umgebenden Bereichen für ein eventuelles, anschließendes Kaschierverfahren vakuumfähig.

Vorzugsweise wird die Matte vorgeheizt, bevorzugt auf eine Temperatur zwischen 100°c und 300°C, insbesondere zwischen 180°C und 220°C, entweder außerhalb des Werkzeugs oder mittels einer integrierten Heizvorrichtung im Werkzeug. Dadurch wird die Formgebung einer dreidimensionalen Kontur und ggf. das Verbinden mit dem durch zuspritzenden Kunststoff vereinfacht. Die aufgeheizte Matte wird zwischen den offenen Werkzeugkomponenten positioniert und ggf. fixiert. Die Fixierung kann mittels eines Spannrahmens, Klemmen oder Stiften usw. erfolgen.

Vorzugsweise ist eine Werkzeugkomponente stationär vorgesehen, während die andere Werkzeugkomponente verfahrbar ist. Hierbei weist die verfahrbare Werkzeugkomponente vorzugsweise eine oder mehrere Kavitäten und keine Düse, und die andere, stationäre Werkzeugkomponente eine oder mehrere Düsen aber keine Kavität auf. Die Bereitstellung und Zufuhr des Kunststoffs lässt sich einfacher durch die stationäre Werkzeugkomponente bewerkstelligen, während ein Auswurf der Anbauteile auf der verfahrbaren Seite günstig ist.

Vorzugsweise weist die Vorrichtung zumindest eine Schneidkante auf, an der ein Konturbeschnitt oder Beschnitt eines Durchbruchs durchgeführt wird. Die Schneidkante kann so ausgebildet sein, dass an ihr ein Schnitt, beispielsweise direkt beim Zusammendrücken der Werkzeugkomponenten, erfolgt, oder die Schneidkante kann so ausgebildet sein, dass der Fasermatte an der Schneidkante eine Schneidkontur für einen nachträglichen Beschnitt des Trägers eingeprägt wird.

Erfindungsgemäß ist die mindestens eine Düse eine Heißkanaldüse mit Nadelverschluss, durch die der Kunststoff mittels Druck auf die Matte beaufschlagt wird. Bei Nadelverschlüssen wird nach dem Einspritzen die Düsenöffnung mittels einer Nadel verschlossen. Beispielsweise kann die Nadel spitz, kegelförmig oder zylindrisch ausgeführt sein. Der Spritzrest wird in das Kunststoffteil gedrückt, so dass die Oberfläche des Anbauteils durch das Nadelsystem einen sauberen "Abschluss" und eine abzeichnungsfreie Geometrie erhält. Ferner können durch die einzeln steuerbaren Nadelverschlüsse die Schmelzmenge und der Schmelzdruck geregelt werden.

Erfindungsgemäß dringt die Nadel der Düse in die Matte ein, wodurch das Durchspritzen erleichtert wird.

Neben den Anbauteilen auf der Rückseite können über zusätzliche Einspritzpunkte auch Elemente oder Beschichtungen auf der Dekorseite angebracht werden. Dazu weist jede Werkzeugkomponente vorzugsweise zumindest jeweils eine Düse und zumindest jeweils eine Kavität auf. In einer speziellen Ausführungsform werden auf der Rückseite Anbauteile und auf der Vorderseite eine Dekorschicht aus Kunststoff ausgebildet. In diesem Fall weist jede der beiden Werkzeugkomponenten jeweils zumindest eine Düse auf, wobei auf der Rückseite Kavitäten vorgesehen sind, die zur Ausbildung von Anbauteilen geeignet sind, und auf der Vorderseite keine oder eine zur Ausbildung der Dekorschicht geeignete, flache Kavität vorgesehen ist. Diese kann beispielsweise dem sich als Dekorschicht auf der Vorderfläche der Matte anlegenden Kunststoff eine genarbte Oberflächenstruktur verleihen.

Zur Vereinfachung der Durchdringung des Kunststoffs kann die Matte perforiert werden oder anderweitig mit Öffnungen und/oder Kanälen vorbereitet werden.

In einer besonderen Ausführungsform ist eine der beiden Werkzeugkomponenten als eine mittlere Werkzeugkomponente zwischen der anderen Werkzeugkomponente und einer dritten Werkzeugkomponente angeordnet. Die mittlere Werkzeugkomponente weist zwei Seiten auf, die jeweils zumindest eine Kavität und/oder zumindest eine Düse aufweisen. Die mittlere Werkzeugkomponente wirkt mit den beiden anderen Werkzeugkomponenten vorzugsweise gleichzeitig so zusammen, dass zwei Matten simultan verpresst und mit Anbauteilen versehen werden können.

In einer bevorzugten Ausführungsform ist die mittlere Werkzeugkomponente stationär und/oder verfahrbar vorgesehen. Die beiden anderen Werkzeugkomponenten sind so gestaltet, dass beide verfahrbar sind oder die eine der beiden Werkzeugkomponenten stationär und die andere der beiden Werkzeugkomponenten verfahrbar ist.

Vorzugsweise ist die mittlere Werkzeugkomponente als bewegliche Wendeeinheit ausgebildet. Die Wendeeinheit ist relativ zu den beiden anderen Werkzeugkomponenten drehbar.

Wenn eine mittlere Werkzeugkomponente vorgesehen ist, kann mit dieser Vorrichtung ein einstufiges und ein zweistufiges Verfahren realisiert werden. Beim einstufigen Verfahren werden auf beiden Seiten der mittleren Werkzeugkomponente vorzugsweise gleichzeitig Formteile gemäß dem obigen Verfahren ohne eine dritte Werkzeugkomponente ausgebildet. Der Auswurf der Vorrichtung wird somit verdoppelt. In diesem Fall kann die mittlere Werkzeugkomponente sowohl als stationäre und/oder verfahrbare Werkzeugkomponente, als auch in Form einer Wendeeinheit ausgebildet sein, um beispielsweise das Einlegen einer oder der beiden in dem einen Werkzeug zu verpressenden Matten zu vereinfachen.

Beim zweistufigen Verfahren finden die Verpressung der Matte und die Integration eines ersten bzw. einer ersten Gruppe von Anbauteilen auf der einen Seite der Vorrichtung statt. Dazu wird das Werkzeug geschlossen und das Verfahren analog der obigen Beschreibung ausgeführt. Anschließend wird das Werkzeug geöffnet und die Wendeeinheit mit dem daran befestigten Zwischenprodukt gedreht, so dass das Zwischenprodukt der dritten Werkzeughälfte zugeführt wird. Das Werkzeug wird abermals geschlossen, um eine Dekorschicht aufzubringen bzw. zu hinterspritzen und/oder um eine weitere Gruppe von Anbauteilen mit der Matte in einem Spritzgussverfahren zu integrieren. Indem Matten der Vorrichtung so zugeführt werden, dass bei jedem Schließvorgang der Vorrichtung beide Formhohlräume mit Matten versehen sind, kann eine Verlängerung des Herstellungszyklus trotz Zweistufigkeit des Verfahrens vermieden werden.

Die drei Werkzeugkomponenten bilden zusammen zwei Einheiten zum Verpressen der Matten und Integrieren von Anbauteilen. Zumindest die mittlere Werkzeugkomponente und eine der beiden Werkzeugkomponenten sind vorzugsweise verfahrbar vorgesehen, wobei die beiden äußeren Werkzeugkomponenten, somit auch die äußere, verfahrbare Werkzeugkomponente, vorzugsweise jeweils eine Düse aufweisen. In einer bevorzugten Ausführungsform ist die mittlere Werkzeugkomponente auf beiden Seiten jeweils zumindest mit einer Kavität und keiner Düse vorgesehen, wobei die anderen Werkzeugkomponenten zumindest eine Düse und keine Kavität aufweisen.

Vorzugsweise wird das Einspritzen des Kunststoffs, d. h. das Herstellen und Integrieren des Anbauteils, nach einer kurzen Wartezeit nach Beendigung des Schließens des Werkzeugs und Verpressen der Matte ausgeführt. Auf diese Weise kann der Verfestigungsgrad gesteuert werden, mit dem das Integrieren des Anbauteils erfolgen soll.

Vorzugsweise umfasst der Kunststoff ein Polymer, vorzugweise PP, ABS, PC/ABS, PA, insbesondere kann dem Polymer Füll- und/oder Verstärkungsstoffe beigefügt sein, wie PP T20.

Vorzugsweise ist die Matte ein thermo- oder duroplastisches Fasersystem mit Naturfasern, Glasfasern, Mineralfasern, synthetische Fasern, Zellulosefasern und/oder Karbonfasern.

### Kurze Beschreibung der Zeichnungen

- Figur 1A: zeigt schematisch eine Vorrichtung zur Herstellung eines Formteils mit zwei Werkzeugkomponenten in einem geöffneten Zustand.
- Figur 1B: zeigt die Vorrichtung der Figur 1A in einem geschlossenen Zustand.
- Figur 2A: zeigt eine Vorrichtung zur Herstellung eines Formteils mit drei Werkzeugkomponenten in einem geöffneten Einlegezustand.
- Figur 2B: zeigt die Vorrichtung der Figur 2A in einem geschlossenen Zustand.
- Figur 3: zeigt eine Vorrichtung zur Herstellung eines Formteils mit drei Werkzeugkomponenten in einem geöffneten Zustand.
- Figur 4: zeigt eine weitere Vorrichtung zur Herstellung eines Formteils mit drei Werkzeugkomponenten.

### Bevorzugte Ausführungsformen der Erfindung

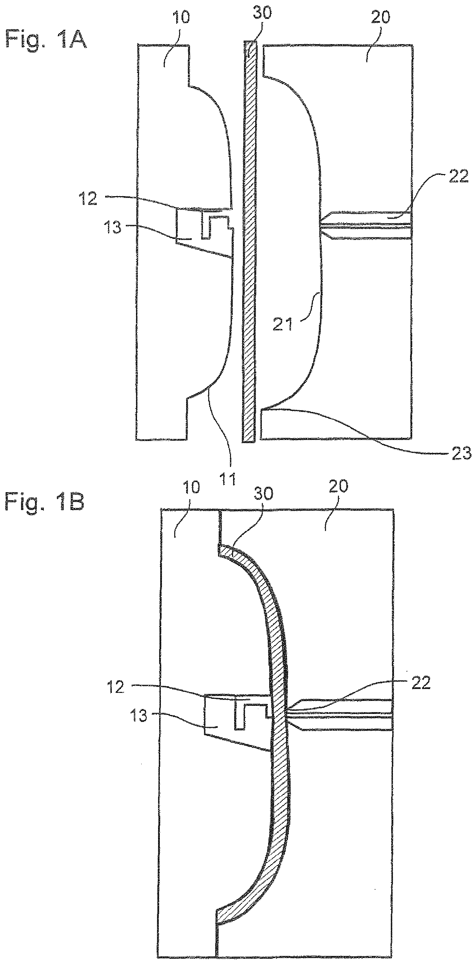

In der Figur 1A ist eine bewegliche Werkzeugkomponente 10 und eine stationäre Werkzeugkomponente 20 gezeigt. Diese beiden Werkzeugkomponenten sind als Formelemente mit Prägeflächen 11 und 21 ausgebildet und weisen eine solche Form auf, dass beim Zusammenpressen der Prägeflächen 11 und 21 eine zwischen den Prägeflächen 11 und 21 eingelegte Fasermatte 30 die Form des gewünschten Trägerelements annimmt. In Figur 1A ist der geöffnete Zustand gezeigt, in dem die Fasermatte 30 eingelegt ist.

Die stationäre Werkzeugkomponente 20 weist eine Heißkanaldüse mit Nadelverschluss 22 auf, die geeignet ist, eine heiße Kunststoffschmelze gegen die noch unverpresste oder bereits verpresste Matte 30 mittels Druck zu beaufschlagen. Soll die Beaufschlagung gegen die noch nicht verpresste Matte 30 erfolgen, so weist das Werkzeug zumindest einen weiteren Zwischenzustand auf, in dem das Werkzeug zwar geschlossen ist, eine Verpressung der Matte aber noch nicht, oder nur zu einem Teil, stattfindet.

Im geschlossenen Zustand der Vorrichtung liegt der Düse 22 eine Kavität 12 gegenüber, so dass nach Öffnen der Nadel des Verschlusses der Düse 22 die heiße, druckbeaufschlagte Schmelze die verpresste Matte 30, oder die zumindest zum Teil verpresste Matte 30, durchdringt und in die gegenüberliegende Kavität 12 gelangt. Auf diese Weise wird ein Anbauteil auf einer Seit der Matte 30, die als Rückseite bezeichnet wird, ausgebildet. Der Hohlraum der Kavität 12 entspricht hierbei der Form des Anbauteils. Die Kavität 12 kann in einem auswechselbaren oder beweglichen Werkzeugelement 13 vorgesehen sein, so dass durch einfachen Umbau des Werkzeugs verschiedene Anbauteile, und somit verschiedene Dekorelementträger oder Dekorelemente, hergestellt werden können.

In den Figuren 1A und 1B sind lediglich jeweils eine Düse 22 und eine Kavität 12 gezeigt. Selbstverständlich können mehrere Düsen und mehrere Kavitäten vorgesehen sein. Hierbei ist die in den Figuren 1A und 1B gezeigte Zuordnung der Kavität 12 und der Düse 22 zur beweglichen Werkzeughälfte 10 bzw. stationären Werkzeughälfte 20 nicht bindend. Indem Kavitäten auf jeweils beiden Seiten und Düsen auf jeweils beiden Seiten vorgesehen sind, können Anbauteile oder Kunststoffdekorschichten auf beiden Seiten der Fasermatte vorgesehen werden. Hierbei ist es denkbar, auf der Vorderseite der Matte eine Dekorschicht mit von der Rückseite durchspritztem Kunststoff oder von der Vorderseite beaufschlagtem Kunststoff auszubilden.

In einem ersten Fertigungsschritt wird die Matte 30 zwischen die Werkzeugkomponenten 10 und 20 gebracht und ggf. an einer der beiden Werkzeughälften 10 und 20 befestigt. Die Temperatur der Matte 30 kann im Voraus oder mit einer Heizvorrichtung erhöht werden, die in einer oder in beiden Werkzeugkomponenten 10, 20 integriert ist. Anschließend fahren die Werkzeugkomponenten 10, 20 zusammen und verpressen die Matte 30, wie es in der Figur 1B dargestellt ist.

Durch das Verpressen wird die Matte 30 verfestigt und die dreidimensionale Kontur des auszubildenden Trägers bestimmt. Nach Abkühlung der verpressten Matte 30 liegt ein formstabiler Träger vor. Ferner wirkt mit dem Zusammenfahren der beiden Werkzeugkomponenten eine Schneid-/Pitschkante 23 auf die Matte 30, so dass ein Konturbeschnitt oder auch ein Beschnitt eines Durchbruchs bereits in diesem Arbeitsschritt durchgeführt werden kann.

Während oder nachdem der Formprozess abgeschlossen ist, wird bei geschlossenem Werkzeug über die Düse 22 eine Kunststoffschmelze eingebracht, welche die Fasermatte 30 durchdringt und die noch offene Kavität 12 füllt. Zur Vereinfachung der Durchdringung der Kunststoffschmelze kann die Fasermatte 30 vorher perforiert werden oder auf andere Weise durchlöchert oder durchlässig gemacht werden. Beispielsweise kann die Nadel der Düse 22 in die Matte 30 eingefahren werden, um den Durchdringungsweg zu verkürzen oder einen Durchbruch durch die Matte 30 zu schaffen.

Mit der Durchdringung des eingespritzten Kunststoffs durch das thermo- oder duroplastische Fasermattensystem erfolgt nicht nur eine feste Verbindung, die auf einer mechanischen Hinterkrallung des verfestigten Anbauteils mit dem formstabilen Träger beruht, sondern auch auf eine feste Verbindung, die einer Verbindung der jeweiligen Kunststoffmaterialien beruht, da sich beide in dem Herstellungsprozess in einem noch viskosen, verbindbaren Zustand befinden. Nach Abkühlung des Produktes wird somit eine ausgezeichnete Integrität der Anbauteile mit dem faserverstärkten Träger geschaffen.

Selbstverständlich können weitere Arbeitsschritte, wie beispielsweise Zuschneiden, Endformen, Kaschieren und dergleichen, ausgeführt werden.

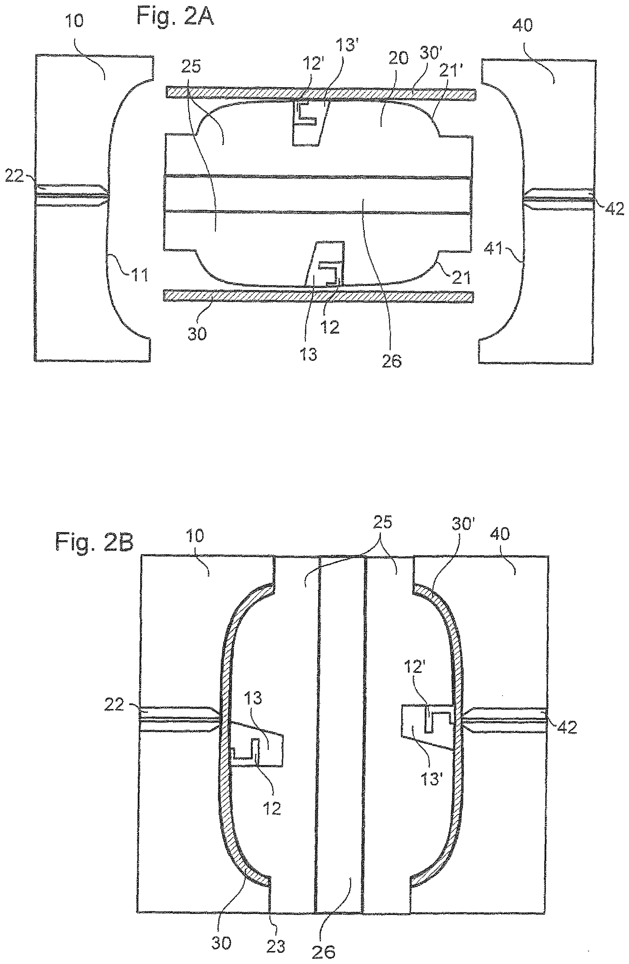

In einer anderen Ausführungsform gemäß den Figuren 2A und 2B ist die Werkzeughälfte 20 als Wendeeinheit 26 ausgelegt, die zwei Werkzeugseiten 25 zum Pressen und Spritzen aufweist. Die beiden Werkzeugseiten 25 weisen jeweils eine Prägefläche 21 und 21' auf, die identisch oder unterschiedlich vorgesehen sein können. Die Prägeflächen 21 und 21' wirken mit der Prägefläche 11 der Werkzeugkomponente 10 und mit der Prägefläche 41 einer dritten Werkzeugkomponente 40 zusammen. Die Wendeeinheit 26 ist relativ zu den Werkzeugkomponenten 10 und 40 drehbar.

Mit einer Anordnung dieser Form kann ein einstufiges Verfahren und ein zweistufiges Verfahren ausgeführt werden.

Das einstufige Verfahren gleicht dem bereits beschriebenen Herstellungsprozess, wobei die Vorrichtung eine simultane Herstellung von zwei Formteilen ermöglicht. Die Wendefähigkeit der Wendeeinheit 26 vereinfacht das Einlegen der Matten. Nach dem Einlegen zweier Matten in dem Zustand der Vorrichtung, der in Fig. 2A gezeigt ist, dreht sich die Wendeeinheit um 90 Grad im Uhrzeigersinn. Die Prägeflächen 21 und 21' der Werkzeugseiten 25 stehen nun den entsprechenden Prägeflächen 11 und 41 der Werkzeughälften 10 und 40 gegenüber. Durch Zusammenfahren wird auf beiden Seiten eine Verpressung ausgeführt, wie es in Fig. 2B gezeigt ist, wodurch die faserverstärkten Träger ausgebildet werden. Gleichzeitig oder nach dem Pressen, ggf. nach einer kurzen Wartezeit, wird Kunststoff durch die Düsen 22 und 42 in die entsprechenden Kavitäten 12 und 12' in den Werkzeugseiten 25 der Wendeeinheit 26 eingespritzt. Nach Ablauf der Kühlzeit öffnet sich das Werkzeug und die Wendeeinheit dreht sich wieder um 90 Grad im Uhrzeigersinn oder dreht sich gegen den Uhrzeigersinn um 90 Grad zurück, woraufhin die beiden hergestellten Formteile entnommen werden können.

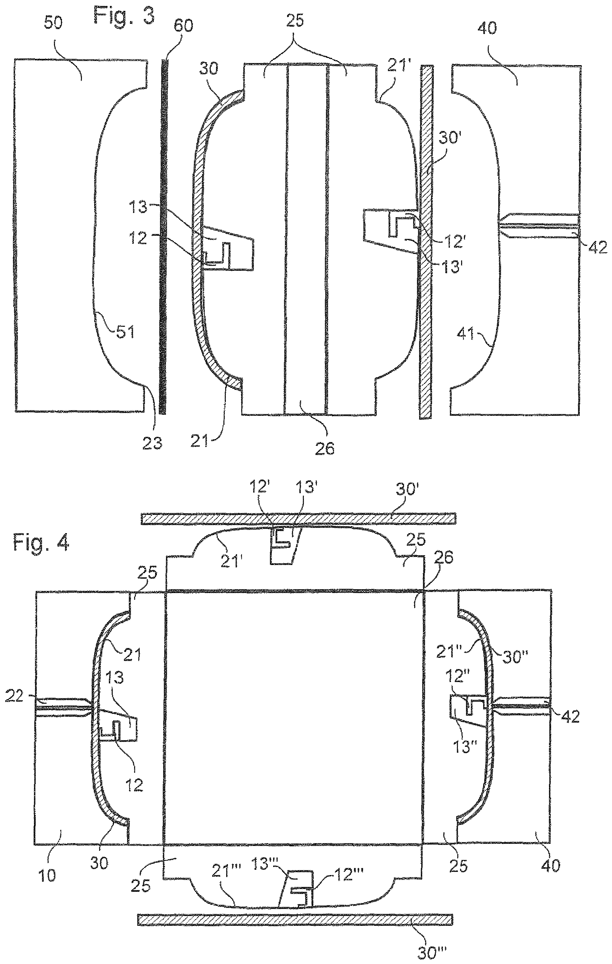

In dem zweistufigen Verfahren wird zunächst in einem Einlegezustand, ähnlich dem der in der Figur 2A gezeigt ist, eine Matte 30' auf der einen Seite der Wendeeinheit 26 eingelegt bzw. eingespannt, während auf der anderen Seite eine bereits verpresste und mit Anbauteilen versehene Matte 30 an der Prägefläche 21 der Wendeeinheit 26 anliegt. Im nächsten Arbeitsschritt wird gemäß der Fig. 3 die Wendeeinheit 26 gedreht, so dass die neu eingelegte Matte 30' beim Schließen des Werkzeugs mit der dritten Werkzeugkomponente 40 zusammenwirkt, während die zweite Matte 30 beim Schließen des Werkzeugs mit einer ersten Werkzeugkomponente 50 zusammenwirkt. Die neu eingelegte Matte 30' wird analog zu dem in Fig. 1B gezeigten Verfahren verpresst und zumindest ein Anbauteil angespritzt. Die bereits verpresste Matte 30 wird mit einer Dekorschicht 60, vorzugsweise einer Dekorfolie, kaschiert. Die Prägefläche 51 der ersten Werkzeugkomponente 50 wirkt dazu mit der Wendeeinheit 26 in geeigneter Weise zusammen.

Auf diese Weise durchläuft die Matte zwei Formgebungsstadien und/oder zwei Integrationsstadien. Eine Aufteilung der Arbeitschritte Verpressung und Integration auf die beiden Seiten der Vorrichtung ist möglich. In diesem Fall kann die Werkzeugkomponente 50 oder 40 und eine der beiden Hälften 25 frei von Kavitäten und/oder Düsen sein.

Die übrigen Verfahrensabläufe, Verpressen und Integrieren eines Anbauteils, laufen analog zur obigen Beschreibung zu den Figuren 1A und 1B ab.

Eine Modifikation der Ausführungsform mit Wendeeinheit ist in Figur 4 gezeigt, in der eine Verkürzung des Arbeitszyklus dadurch erreicht wird, dass das Einlegen der Matte und Verpressen der Matte gleichzeitig erfolgt. Hierzu weist die Wendeeinheit 26 eine "Würfelstruktur" auf, bei der die fahrbare Wendeeinheit 26 vier Werkzeugseiten 25 mit Prägeflächen 21, 21', 21'' und 21''' aufweist. Den Werkzeugseiten 25 sind jeweils Kavitäten 12, 12', 12'' und 12''' in ggf. auswechselbaren Werkzeugelementen 13, 13', 13'' und 13''' zugeordnet. Diese wirken auf oben beschriebene Weise mit Düsen 22 und 42 der beiden Werkzeugkomponenten 10 und 40 zusammen.

Die obige Würfelstruktur der Vorrichtung kann weiterentwickelt werden, indem neben den Werkzeugkomponenten 10 und 40 weitere zwei Werkzeugkomponenten vorgesehen sind, so dass ein gleichzeitiges Verpressen und Integrieren an vier Seiten, oder allgemeiner an beliebig vielen Seiten des Würfels, vorgenommen werden kann.

## Patentansprüche

1. Verfahren zur Herstellung eines Formteils mit einem faserverstärkten Träger und mindestens einem damit verbundenen, Kunststoff aufweisenden Anbauteil, umfassend die Schritte:
a) Einlegen einer faserverstärkten Matte (30) zwischen zwei Werkzeugkomponenten (10, 20), die sich in einem offenen Zustand befinden, wobei eine Werkzeugkomponente (20) zumindest eine Düse (22) zum Zuführen verflüssigten Kunststoffes und die andere Werkzeugkomponente (10) zumindest eine Kavität (12) zur Ausbildung des Anbauteils aufweisen;
b) Schließen der Werkzeugkomponenten (10, 20), so dass die Matte (30) unter Druck gesetzt und verpresst wird, um den faserverstärkten Träger herzustellen;
c) Herstellen und Integrieren des Anbauteils, indem Kunststoff durch die Düse (22) und durch die Matte (30) in die Kavität (12) eingebracht und dort verfestigt wird;
wobei die Düse (22) eine Heißkanaldüse mit Nadelverschluss ist, durch die der Kunststoff mittels Druck auf die Matte (30) beaufschlagt wird, wobei eine Nadel der Düse (22) in die Matte (30) eindringt.

2. Verfahren nach Anspruch 1, **dadurch gekennzeichnet, dass** der Schritt c) nach kurzer Wartezeit nach Beendigung des Schritts b) ausgeführt wird.

3. Verfahren nach Anspruch 1 oder 2, **dadurch gekennzeichnet, dass** die Matte (30) vorgewärmt wird, bevorzugt auf eine Temperatur zwischen 100°C und 300°C, insbesondere zwischen 180°C und 220°C.

4. Verfahren nach einem der Ansprüche 1 bis 3, **dadurch gekennzeichnet, dass** der Kunststoff ein Polymer umfasst, vorzugweise PP, ABS, PC/ABS, PA, insbesondere kann dem Polymer Füll- und/oder Verstärkungsstoffe beigefügt sein, wie PP T20, und/oder die Matte ein thermo- oder duroplastisches Fasersystem mit Naturfasern, Glasfasern, Mineralfasern, synthetische Fasern, Zellulosefasern und/oder Karbonfasern.

5. Verfahren nach einem der Ansprüche 1 bis 4, **dadurch gekennzeichnet, dass**
- eine der beiden Werkzeugkomponenten (20) eine stationäre und/oder verfahrbare Einheit (26) mit Kavität (12, 12') und/oder Düse ist und zwischen der anderen Werkzeugkomponente (10) und einer dritten Werkzeugkomponente (40) vorgesehen ist, wobei
- im Schritt b) die mittlere Werkzeugkomponente (20) gleichzeitig mit den beiden anderen Werkzeugkomponenten (10, 40) zusammenwirkt, so dass auf beiden Seiten der mittleren Werkzeugkomponente (20) jeweils eine Matte (30, 30') bearbeitet, vorzugsweise unter Druck gesetzt und verpresst wird, um einen oder zwei faserverstärkte Träger (30, 30') herzustellen, und
- im Schritt c) zumindest ein Anbauteil hergestellt und mit der entsprechenden Matte (30, 30') integriert wird, indem Kunststoff durch eine Düse (22, 24) und durch die Matte (30, 30') in die entsprechende Kavität (12, 12') eingebracht und dort verfestigt wird.

6. Verfahren nach einem der Ansprüche 1 bis 5, **dadurch gekennzeichnet, dass**
- eine der beiden Werkzeugkomponenten (20) eine bewegliche Wendeeinheit (26) mit Kavität (12, 12') und/oder Düse ist und zwischen der anderen Werkzeugkomponente (10) und einer dritten Werkzeugkomponente (40) vorgesehen ist, wobei
- im Schritt b) die mittlere Werkzeugkomponente (20) gleichzeitig mit den beiden anderen Werkzeugkomponenten (10, 40) zusammenwirkt, so dass auf beiden Seiten der mittleren Werkzeugkomponente (20) jeweils eine Matte (30, 30') bearbeitet, vorzugsweise unter Druck gesetzt und verpresst wird, um einen oder zwei faserverstärkte Träger (30, 30') herzustellen, und
- im Schritt c) zumindest ein Anbauteil hergestellt und mit der entsprechenden Matte (30, 30') integriert wird, indem Kunststoff durch eine Düse (22, 24) und durch die Matte (30, 30') in die entsprechende Kavität (12, 12') eingebracht und dort verfestigt wird.

## Claims

1. Method for producing a moulded part having a fibre-reinforced support and at least one add-on part which is connected to said fibre-reinforced support and comprises plastics material, said method comprising the following steps:
a) laying up a fibre-reinforced mat (30) between two tool components (10, 20) which are in an open state, wherein one tool component (20) has at least one nozzle (22) for feeding liquefied plastics material, and the other tool component (10) has at least one cavity (12) for configuring the add-on part;
b) closing the tool components (10, 20) such that the mat (30) is put under pressure and compressed so as to produce the fibre-reinforced support;
c) producing and integrating the add-on part in that plastics material by way of the nozzle (22) and by way of the mat (30) is incorporated into the cavity (12) and is solidified in the latter;
wherein the nozzle (22) is a hot runner nozzle with a needle closure by way of which the plastics material by means of pressure is applied to the mat (30), wherein a needle of the nozzle (22) invades the mat (30).

2. Method according to Claim 1, **characterized in that** step c) is carried out after a short waiting time upon completion of step b).

3. Method according to Claim 1 or 2, **characterized in that** the mat (30) is pre-heated, preferably to a temperature between 100°C und 300°C, in particular between 180°C and 220°C.

4. Method according to one of Claims 1 to 3, **characterized in that** the plastics material comprises a polymer, preferably PP, ABS, PC/ABS, PA; filler materials and/or reinforcement materials such as PP T20 being in particular potentially added to the polymer, and/or a thermoplastic or thermosetting fibre system comprising natural fibres, glass fibres, mineral fibres, synthetic fibres, cellulosic fibres and/or carbon fibres being in particular potentially added to the mat.

5. Method according to one of Claims 1 to 4, **characterized in that**
- one of the two tool components (20) is a stationary and/or repositionable unit (26) having a cavity (12, 12') and/or a nozzle, and is provided between the other tool component (10) and a third tool component (40), wherein
- in step b) the central tool component (20) interacts simultaneously with the two other tool components (10, 40) such that one mat (30, 30') is in each case processed, preferably put under pressure and compressed, on both sides of the central tool component (20) so as to produce one or two fibre-reinforced support/supports (30, 30'); and
- in step c) at least one add-on part is produced and integrated in the respective mat (30, 30') **in that** plastics material by way of a nozzle (22, 24) and by way of the mat (30, 30') is incorporated into the respective cavity (12, 12') and solidified in the latter.

6. Method according to one of Claims 1 to 5, **characterized in that**
- one of the two tool components (20) is a movable reversing unit (26) having a cavity (12, 12') and/or a nozzle, and is provided between the other tool component (10) and a third tool component (40); wherein
- in step b) the central tool component (20) interacts simultaneously with the two other tool components (10, 40) such that one mat (30, 30') is in each case processed, preferably put under pressure and compressed, on both sides of the central tool component (20) so as to produce one or two fibre-reinforced support/supports (30, 30'); and
- in step c) at least one add-on part is produced and integrated in the respective mat (30, 30') **in that** plastics material by way of a nozzle (22, 24) and by way of the mat (30, 30') is incorporated into the respective cavity (12, 12') and solidified in the latter.

## Revendications

1. Procédé de production d'une pièce moulée pourvue d'un support renforcé de fibres et d'au moins une pièce rapportée reliée à celui-ci et comportant de la matière synthétique, le procédé comprenant les étapes suivantes :
a) insérer un mat (30) renforcé de fibres entre deux composants d'outil (10, 20) qui sont à l'état ouvert, un composant d'outil (20) comportant au moins une buse (22) destinée à amener de la matière synthétique liquéfiée et l'autre composant d'outil (10) comportant au moins une cavité (12) destinée à former la pièce rapportée ;
b) fermer les composants d'outil (10, 20) de façon à mettre sous pression et comprimer le mat (30) afin de produire le support renforcé de fibres ;
c) produire et intégrer la pièce rapportée par introduction, à travers la buse (22) et à travers le mat (30), et par solidification de la matière synthétique dans la cavité (12) ;
la buse (22) étant une buse à canal chaud pourvue d'une soupape à pointeau à travers laquelle la matière synthétique est appliquée au moyen d'une pression sur le mat (30), un pointeau de la buse (22) pénétrant dans le mat (30).

2. Procédé selon la revendication 1, **caractérisé en ce que** l'étape c) est réalisée après un court temps d'attente après la fin de l'étape b).

3. Procédé selon la revendication 1 ou 2, **caractérisé en ce que** le mat (30) est préchauffé, de préférence à une température comprise entre 100 °C et 300 °C, en particulier entre 180 °C et 220 °C.

4. Procédé selon l'une des revendications 1 à 3, **caractérisé en ce que** la matière synthétique comprend un polymère, de préférence PP, ABS, PC/ABS, PA, en particulier des charges et/ou des matières de renfort pouvant être ajoutés au polymère, tel que PP T20, et/ou le mat est un système de fibres thermoplastiques ou duroplastiques pourvu de fibres naturelles, de fibres de verre, de fibres minérales, de fibres synthétiques, de fibres de cellulose et/ou de fibres de carbone.

5. Procédé selon l'une des revendications 1 à 4, **caractérisé en ce que**
- l'un des deux composants d'outil (20) est une unité fixe et/ou mobile (26) pourvue d'une cavité (12, 12') et/ou d'une buse et est prévu entre l'autre composant d'outil (10) et un troisième composant d'outil (40),
- à l'étape b), le composant d'outil central (20) interagit simultanément avec les deux autres composants d'outil (10, 40) de sorte qu'un mat (30, 30') est usiné des deux côtés du composant d'outil central (20), de préférence est mis sous pression et comprimé pour produire un ou deux supports (30, 30') renforcés de fibres, et
- à l'étape c) au moins une pièce rapportée est réalisée et intégrée au mat correspondant (30, 30') par introduction, à travers une buse (22, 24) et à travers le mat (30, 30'), et solidification de matière synthétique dans la cavité correspondante (12, 12').

6. Procédé selon l'une des revendications 1 à 5, **caractérisé en ce que**
- l'un des deux composants d'outil (20) est une unité de retournement mobile (26) pourvue d'une cavité (12, 12') et/ou d'une buse et est prévue entre l'autre composant d'outil (10) et un troisième composant d'outil (40),
- à l'étape b) le composant d'outil central (20) coopère simultanément avec les deux autres composants d'outils (10, 40) de sorte qu'un mat (30, 30') est usiné des deux côtés du composant d'outil central (20), de préférence mis sous pression et comprimé, pour produire un ou deux supports (30, 30') renforcés de fibres, et
- à l'étape c) au moins une pièce rapportée est réalisée et intégrée au mat correspondant (30, 30') par introduction, à travers une buse (22, 24) et à travers le mat (30, 30'), et solidification de matière synthétique dans la cavité correspondante (12, 12').
